(19) **Europäisches Patentamt / European Patent Office / Office européen des brevets**

(11) **EP 2 374 842 B2**

(12) # NEW EUROPEAN PATENT SPECIFICATION
### After opposition procedure

(45) Date of publication and mention
of the opposition decision:
**18.09.2019 Bulletin 2019/38**

(45) Mention of the grant of the patent:
**10.07.2013 Bulletin 2013/28**

(21) Application number: **10003716.7**

(22) Date of filing: **06.04.2010**

(51) Int Cl.:
*C08K 3/04* (2006.01)  *H01B 1/24* (2006.01)
*C08J 5/00* (2006.01)

---

(54) **Semiconductive polyolefin composition comprising conductive filler**

Halbleitende Polyolefinzusammensetzung, die leitenden Füllstoff umfasst

Composition de polyoléfine semi-conductrice comprenant une charge conductrice

---

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(43) Date of publication of application:
**12.10.2011 Bulletin 2011/41**

(73) Proprietor: **Borealis AG**
**1220 Vienna (AT)**

(72) Inventors:
• **Svanberg, Christer**
**428 34 Kallered (SE)**
• **Pham, Tung**
**4040 Linz (AT)**
• **Malik, Muhammad Ali**
**444 42 Stenungsund (SE)**
• **Costa, Francis**
**4020 Linz (AT)**
• **Liu, Yi**
**4020 Linz (AT)**
• **Uematsu, Takashi**
**444 42 Stenungsund (SE)**
• **Gkourmpis, Thomas**
**41132 Gothenburg (SE)**

(74) Representative: **Kador & Partner PartG mbB**
**Corneliusstraße 15**
**80469 München (DE)**

(56) References cited:
WO-A1-2008/079585  WO-A1-2010/016976
US-A1- 2002 054 995  US-A1- 2009 294 736

• **Staudenmaier L.: "Verfahren zur Darstellung der Graphitsäure", Berichte der Deutschen chemischen Gesellschaft, Vol. 31, 1481-1487, 1998**

EP 2 374 842 B2

**Description**

The present invention relates to a power cable comprising a semiconductive polyolefin composition comprising graphene nanoplatelets. It also relates to a power cable comprising a semiconductive polyolefin composition comprising the combination of graphene nanoplatelets and carbon black. Moreover, the present invention is related to the use of the semiconductive polyolefin composition in a power cable.

A semiconductive material is defined as a material having an electrical conductivity intermediate between insulators and conductors. A typical range of electrical conductivity for semiconductors is in the range from $10^{-9}$ to $10^{3}$ S/cm corresponding to electrical resistivity between $10^{9}$ to $10^{-3}$ ohm cm (see for example McGraw-Hill Dictionary of Scientific and Technical Terms,4th Ed., pp. 1698, 1989).

A common means to achieve a semiconductive polymer composite is to incorporate carbon black in the polymer with typically 30 to 50 wt% such as for example disclosed in US patent No. 5,556,697. However, high loadings of carbon black result in high viscosity of the compounds. Lower carbon black loadings are desirable to improve the processability of the compounds in cable extrusions yet maintaining high conductivity. One option is high structure carbon black such as Ketjen Black. This can reduce the required amount of conductive filler but, due to the high structure the viscosity is drastically increased even at these low loadings.

Carbon black may be replaced by expanded graphite to increase the conductivity, as described in WO2008/079585. WO2008/079585 discloses a semiconductive composition comprising a polyolefin polymer and an expanded graphite which is contained in the composition in an amount of 0.1 to 35 wt.% of the total formulation. Processes for preparing the expanded graphite are also disclosed. However, the loading required for expanded graphite to achieve a substantial increase in conductivity is 10 to 15 wt% giving a significant contribution to the viscosity. Even more important is that the large particles of expanded graphite give a very rough surface, which is undesired in cable applications. Hence, there is a need for semiconductive polymeric compositions that combine high conductivity, low viscosity and high surface smoothness.

Other options for increasing the conductivity in semiconductive materials are the incorporation of carbon nanotubes (CNTs) and graphene nanoplatelets (GNPs). US patent application US 2005/0064177 A1 discloses semiconductive compositions with a combination of carbon black (CB) and carbon nanotubes (CNTs). However, the combined loadings of CNT and CB required to achieve a low resistivity is typically in excess of 15 wt%, which results in a reduced ability to flow. It is therefore desirable to have a semiconductive composition with reduced overall filler concentration, enabling smooth surface and good flowability. Moreover, CNTs are presently disfavored due to their extremely high price.

On the other hand, GNPs have recently found applications in electroconductive materials.

Possible production procedures of graphene nanoplatelets and single graphene sheets have been disclosed in e.g. US 2002/054995 A1, US 2004/127621 A1, US 2006/241237 A1 and US 2006/231792 A1. Such processes are for example further discussed by Stankovich et al, Nature 442, (2006) pp.282, and by Schniepp, Journal of Physical Chemistry B,110 (2006) pp. 853. Non-limiting examples of materials are Vor-X™ provided by Vorbecks Materials and xGN™ provided by XG Science.

US2002/054995 A1 discloses how nanoplatelets can be created by high pressure mill giving an aspect ratio between the lateral size and the thickness of 1500:1 and a thickness 1-100 nm.

US patent No. 7,071,258 discloses a process for production of nano-scaled graphene plate material comprising a) partially or fully carbonizing a precursor polymer or heat-treating petroleum or coal tar pitch to produce polymeric carbon containing micron- and/or nanometer-scaled graphite crystallites with each crystallites comprising one sheet or a multiplicity of sheets of graphite plane; b) exfoliating the graphite crystallites; and c) mechanical attrition treatment. One dimension is less than 100 nm.

WO2008/045778 A1 discloses a process for functionalisation of graphene sheets. The method is based on adding solvent to obtain graphite oxide with spatially expanded graphene interlayers and subsequently superheating the graphite oxide to decompose the graphite oxide. The obtained surface area is in the range of 300 to 2600 $m^2$/g.

However, from literature reference it can be inferred that an average platelet thickness less than 50 nm cannot be achieved by sonication of expanded graphite materials, see for example Chen et al, Polymer 44 (2003) pp. 1781 and references cited therein.

Electrically conductive polymer nanocomposites have been disclosed using single or multi-layers graphene nanoplatelets as in WO2008/045778A1 and WO2008/143692A1. However, composites with a combination of surface smoothness, low viscosity and low electrical resistivity, have not been disclosed and cable applications are not targeted. This unique combination of properties is central for cable applications, especially semiconductive shields in power cables.

In another aspect, mixtures of GNPs and carbon black as conductive filler are disclosed, e.g. in US patent No. 4,971,726 discloses semiconductive composites with carbon black and expanded graphite having an average particle size of 40 $\mu$m or more, but it does not consider graphene nanoplatelets with small thickness and large aspects ratio between the thickness and the diameter. Large particle size of the expanded graphite leads to rough surface and hence is not suitable for power cable applications. Moreover, to obtain suitable electrical properties substantial amounts of expanded graphite and carbon black are required which gives an undesired increase in the viscosity of the compound.

The semiconductive polyolefin composition as used in the present invention comprising an olefin polymer base resin and graphene nanoplatelets can achieve the above objects. Especially such a polyolefin composition provides a unique property profile with combination of low viscosity, smooth surface and low resistivity which is advantageous for cable applications.

In a preferred embodiment of the present invention the above objects are achieved by admixing a solid conductive filler different from graphene nanoplatelets to the polyolefin composition described above.

The present invention is directed to a power cable comprising a semiconductive layer which comprises the semiconductive polyolefin composition according to the present invention.

Even further, the present invention is also directed to the use of the semiconductive polyolefin composition of the invention in a semiconductive layer of a power cable.

In the following, the figures illustrating the present invention are briefly described. In the figures:

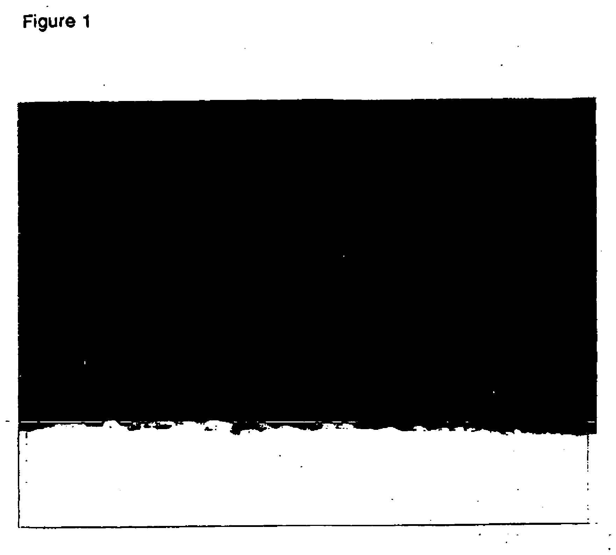

Figure 1 shows optical microscopy photos of the MFR-strings used to determine the surface smoothness of Example #1;

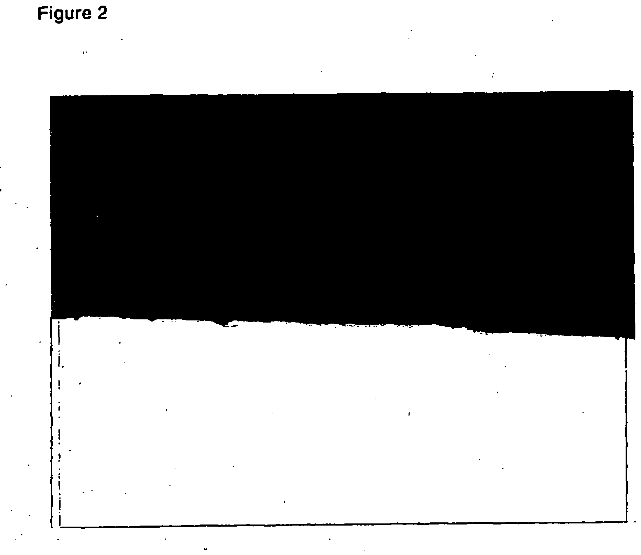

Figure 2 shows optical microscopy photos of the MFR-strings used to determine the surface smoothness of Example #2;

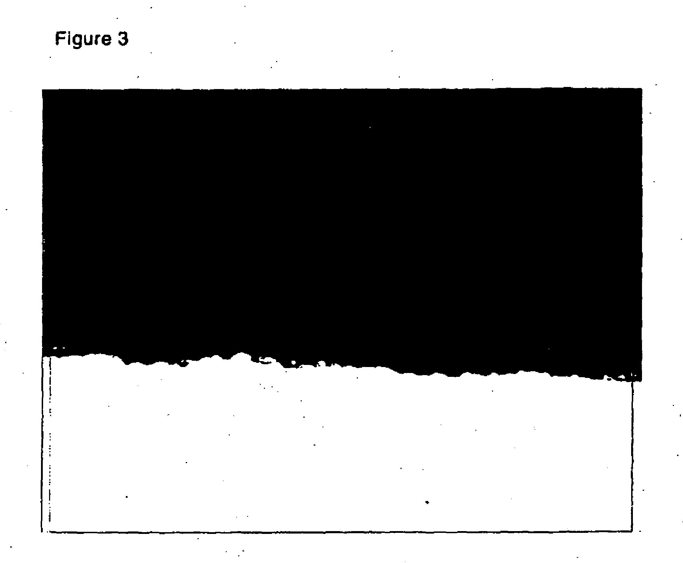

Figure 3 shows optical microscopy photos of the MFR-strings used to determine the surface smoothness of Comparative Example #1; and

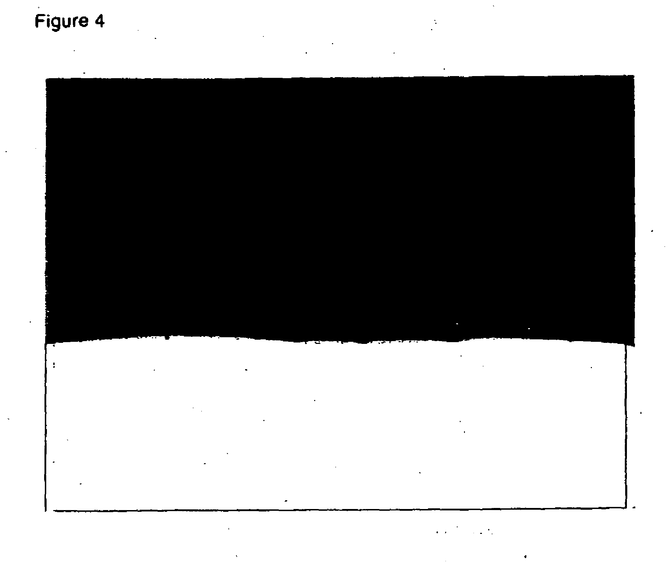

Figure 4 shows optical microscopy photos of the MFR-strings used to determine the surface smoothness of Comparative Example #2.

Detailed description of the invention

The present invention discloses a power cable as defined in claim 1. The semiconductive polyolefin composition used in the present invention with low loading filler concentration has surprisingly low viscosity, high conductivity and excellent surface smoothness. The semiconductive polyolefin composition comprises graphene nanoplatelets (GNP) in combination with an olefin polymer base resin. In a preferred embodiment optionally a solid conductive filler, different from GNP may be used in the semiconductive polyolefin composition used in the present invention.

In the whole disclosure of the present invention the term "expanded graphite" encompasses graphite having no significant order as determined by X-ray diffraction pattern. Expanded graphite has been treated to increase the interplanar distance between the individual layers that form the graphite structure. It is intended that the term "expanded graphite" throughout the present description relates to a graphite material where the distances between the graphene layers have been substantially increased compared to pure graphite. It should be noted in the context of the present invention that general "expanded graphite" structures do not necessarily form graphene nanoplatelets (GNP's) as defined by this invention.

Graphene nanoplatelets (GNPs) are characterised in that the material is composed of one or several layers of two-dimensional hexagonal lattice of carbon atoms. The platelets have a length parallel to the graphite plane, hereafter labeled diameter, and a thickness orthogonal to the graphite plane, hereafter labeled thickness. Another characteristic feature of GNPs is that the platelets are very thin yet have large diameter, hence GNPs have a very large aspect ratio. The typical thickness of graphene nanoplatelets is preferably 40 nm, or less, more preferably 20 nm or less or 10 nm or less. Ranges for the average thickness of the graphene nanoplatelets (b) are from 1 nm to 50 nm, preferably from 1 nm to 40 nm, or from 1 nm to 20 nm. The included lower limit of graphene nanoplatelets are single graphene sheets. The thickness of a single graphene sheets is around 1 nm, as for example measured with atomic force microscopy (AFM) described in detail e.g. by Stankovich et al, Nature 442, (2006), pp. 282. The lateral diameter on the other hand, which can also be measured with AFM, is 200 micrometers or less, preferably 50 micrometers or less or even more preferably 10 micrometers or less. The lateral extension can be controlled by for example milling to the desired size.

It is preferable that the aspect ratio between the diameter and the thickness is 50 or more, more preferable above 500 and most preferable above 1000.

The BET-value of graphene nanoplatelets are typically above 80 $m^2/g$, and can even be up to 2500 $m^2/g$ for materials with a large fraction of single graphene sheets (ASTM D3037).

In another aspect graphene nanoplatelets also include graphene platelets that are somewhat wrinkled such as for example described in Stankovich et al, Nature 442, (2006), pp. 282. Additionally graphene materials with wrinkles to another essentially flat geometry are included. Also more complex secondary structures such as cones are also included, see for example Schniepp, Journal of Physical Chemistry B,110 (2006) pp. 8535. The definition of GNP does not include carbon nanotubes.

In another aspect the GNPs can be functionalised to improve interaction with the base resins. Non-limiting examples of surface modifications includes treatment with nitric acid treatment; $O_2$ plasma; UV/Ozone; amine; acrylamine such as disclosed in US2004/127621 A1.

A specifically preferred embodiment of the graphene nanoplatelets used in the present invention is the commercial product xGNP from XG Science.

In one aspect, the present invention relates to a power cable comprising a semiconductive polyolefin composition comprising an olefin polymer base resin, optionally being a polymeric blend comprising one or more olefin polymers, and graphene nanoplatelets as defined in claim 1, wherein the graphene nanoplatelets are contained in the total composition with a weight percentage of including, but not limited to 2 wt% to 20 wt%, preferably of from 2 to 15 wt%. Further preferred weight ranges may be from 4 to 15 wt%, more preferably 4 to 14 wt%, and most preferably 6 to 12 wt%. The lower limit is due to electrical requirements and the upper limit is due to limitation in the viscosity and surface roughness of the composition.

In another aspect, the graphene nanoplatelets have an average platelet thickness of preferably 40 nm or less, preferably 20 nm or less.

In yet another aspect the present invention relates to graphene nanoplatelets having an aspect ratio of the length divided by the thickness of 50 or more which may be measured by atomic force microscopy (AFM).

The semiconductive polyolefin composition as defined in claim 1 surprisingly provides a combination of advantages. It improves not only processability due to comparatively low viscosity (higher $MFR_2$ values) than conventional semiconductive polyolefin compositions containing carbon black as the conductive filler. Unexpectedly, the present GNP as conductive filler provides at lower loadings the same or even improved level of conductivity compared to conventional carbon blacks. Thus a conveniently low volume resistivity is obtained. Furthermore, the incorporation of GNP into the semiconductive polyolefin compositions gives excellent surface smoothness as expressed by surface roughness calculated as the R_RMS. The method is detailed below. This excellent surface smoothness cannot be achieved by the use of general purpose expanded graphite which usually has rather high particle dimensions, giving increased surface roughness.

Preferably, the semiconductive polyolefin composition has surface roughness characterized by R_RMS, measured on extruded samples, of 100 micrometer or less.

Preferably, the semiconductive polyolefin composition comprises an olefin polymer base resin which may be a polymeric blend comprising one or more olefin polymers, and a combination of graphene nanoplatelets and a solid conductive filler. In an even more preferred embodiment, the solid conductive filler is carbon black.

Preferably, said carbon black fulfills at least one of the following requirements:

a iodine number of at least 30 mg/g, measured in accordance with ASTM D 1510,
a DBP oil adsorption number of at least 30 ml/100 g, measured in accordance with ASTM D 2414,
a BET nitrogen surface area of at least 30 $m^2$/g, measured in accordance with ASTM D 3037,
a statistical surface area (STSA) of at least 30 $m^2$/g measured in accordance with ASTM D5816.

Preferably, said carbon black fulfills any combination of said requirements, more preferably all of said requirements.

The solid conductive filler may be contained in the composition with a fraction of 5 to 95 wt%, preferably 10 to 80 wt%, more preferably 20 to 60 wt% and even more preferably 25 to 50 wt%, in relation to the weight of the graphene nanoplatelets.

It is intended throughout the present description that the expression "solid conductive filler" embraces any type of filler which is electrically conductive and can be dispersed in a polymer. Non limiting examples are electrically conductive carbon black and intrinsically conductive polymers. Any carbon black which is electrically conductive can be used. Preferably the carbon black has one or more of the following properties: i) iodine number of at least 30 mg/g according to ASTM D1510, ii) oil absorption number of at least 30 ml/100g which is measured according to ASTM D2414, iii) nitrogen surface area (BET measurements) of at least 30 $m^2$/g according to ASTM D3037, and iv) statistical surface area (STSA) of at least 30 $m^2$/g according to ASTM D5816. Non-limiting examples of preferable carbon blacks include furnace carbon blacks and acetylene blacks. Non-limiting examples of intrinsic conductive polymers includes poly(p-phenylenevinylene), polyfluorene, polyaniline and polythiophene.

It was unexpectedly found out that with the combination of GNPs and carbon black in the olefin polymer base resin all the above described advantages are retained with the unexpected further reduction of resistivity and viscosity, while a further improvement of surface smoothness is achieved.

Throughout this invention the term "polyolefin" or "olefin polymer" encompasses both an olefin homopolymer and a copolymer of an olefin with one or more comonomer(s). As well known "comonomer" refers to copolymerisable comonomer units.

The polyolefin can be any polyolefin suitable for a semiconductive layer. Preferably, the polyolefin is an olefin homopolymer or copolymer which contains one or more comonomer(s), more preferable an ethylene homo- or copolymer or a propylene homo- or copolymer, and most preferably a polyethylene, which can be made in a low pressure process or a high pressure process. The polyolefin can be e.g. a commercially available polymer or can be prepared according to or analogously to known polymerization process described in the chemical literature.

When the polyolefin, preferably polyethylene, is produced in a low pressure process, then it is typically produced by a coordination catalyst, preferably selected from a Ziegler Natta catalyst, a single site catalyst, which comprises a metallocene and/or non-metallocene catalyst, and/or a Cr catalyst, or any mixture thereof. The polyethylene produced in a low pressure process can have any density, e.g be a very low density linear polyethylene (VLDPE), a linear low density polyethylene (LLDPE) copolymer of ethylene with one or more comonomer(s), medium density polyethylene (MDPE) or high density polyethylene (HDPE). The polyolefin can be unimodal or multimodal with respect to one or more of molecular weight distribution, comonomer distribution or density distribution. As one embodiment low pressure polyethylene may be multimodal with respect to molecular weight distribution. Such a multimodal polyolefin may have at least two polymer components which have different weight average molecular weight, preferably a lower weight average molecular weight (LMW) and a higher weight average molecular weight (HMW). A unimodal polyolefin, preferably low pressure polyethylene is typically prepared using a single stage polymerisation, e.g. solution, slurry or gas phase polymerisation, in a manner well known in the art. A multimodal (e.g. bimodal) polyolefin, for example a low pressure polyethylene can be produced by mechanically blending two or more, separately prepared polymer components or by in-situ blending in a multistage polymerisation process during the preparation process of the polymer components. Both mechanical and in-situ blending is well known in the field. A multistage polymerization process may be preferably carried out in a series of reactors, such as a loop reactor which may be a slurry reactor and/ or one or more gas phase reactor(s). Preferably a loop reactor and at least one gas phase reactor is used. The polymerization may also preceded by a prepolymerisation step.

When the polyolefin, preferably polyethylene, is produced in a high pressure process, a LDPE homopolymer or an LDPE copolymer of ethylene with one or more comonomers may be produced. In some embodiments the LDPE homopolymer or copopolymer may be unsaturated. For the production of ethylene (co)polymers by high pressure radical polymerization, reference can be made to the Encyclopedia of Polymer Science and Engineering, Vol. 6 (1986), pp 383-410 and Encyclopedia of Materials: Science and Technology, 2001 Elsevier Science Ltd.: "Polyethylene: High-pressure, R.Klimesch, D.Littmann and F.-O. Mähling pp. 7181-7184.

In another aspect polyolefin polymers include, but are not limited to, copolymers of ethylene and unsaturated ester with an ester content of at least about 50 wt%, based on the weight of the copolymer. Non-limiting examples of unsaturated esters are vinyl esters, acrylic acid and methacrylic acid esters, typically produced by conventional high pressure processes. The ester can have 4 to about 20 carbon atoms, preferably 4 to 10 atoms. Non-limiting examples of examples of vinyl esters are: vinyl acetate, vinyl butyrate, and vinyl pivalate. Non-limiting examples of acrylic and methacrylic acid esters are: methyl acrylate, ethyl acrylate, t-butyl acrylate, n-butyl acrylate, isopropyl acrylate, hexyl acrylate, decyl acrylate and lauryl acrylate. An exemplary polyolefin which may be used in the present invention is Escorene™ 783 commercially available from ExxonMobile.

In another aspect of this invention the polyolefin is elastomeric ethylene/$\alpha$-olefin copolymers having an $\alpha$-olefin content of from 15 wt%, preferably 25 wt% or more, based on the weight of the copolymer, These copolymers typically have an $\alpha$-olefin content of 50 wt% or less, preferably 40 wt% or less and most preferably 35 wt% or less, based on the weight of the copolymer. The $\alpha$-olefin content is measured by $^{13}$C nuclear magnetic resonance (NMR) spectroscopy as described by Randall (Re. Macromolecular Chem. Phys. C29 (2&3)). The $\alpha$-olefin is preferably a $C_{3-20}$ linear, branched or cyclic $\alpha$-olefin. The term "copolymer" refers to a polymer made from at least two monomers. It includes, for example, copolymers, terpolymers and tetrapolymers, Examples of $C_{3-20}$ $\alpha$-olefins include propene, 1-butene, 4-methyl-1-pentene, 1-hexene, 1-octene, 1-decene. 1-dodecene, 1-tetradecene, 1-hexadecene and 1-octadecene. The $\alpha$-olefins also can contain a cyclic structure cyclohexane or cyclopentane, resulting in an $\alpha$-olefin such as 3-cyclohexyl-1-propene and vinyl cyclohexane. Although not $\alpha$-olefins in the classical sense of the term, for the purpose of this invention certain cyclic olefins such as norbornene and related olefins, particular 5-ethylidene-2-norborene, are encompassed by the term "$\alpha$-olefins" and can be used as described above. Similarly, styrene and its related olefins, e.g. $\alpha$-methylstyrene, etc are $\alpha$-olefins for the purpose of this invention, Illustrative examples of copolymers include ethylene/propylene, ethylene/butane, ethylene/1-hexene, ethylene/1-octene, ethylene/styrene and similar. Illustrative examples of terpolymers include ethylene/propylene/1-octene, ethylene/butane/1-octene, ethylene/propylene/diene monomer (EPDM) and ethylene/butane/styrene, The copolymer can be random or blocky.

In another aspect of this invention the polyolefin may comprise an olefin polymer with hydrolysable silane groups and optionally a silanol condensation catalyst. The polymer composition according to this aspect is preferably an ethylene homopolymer or ethylene copolymer containing crosslinkable silane groups, which have been introduced by either copolymerization or graft polymerization. Non-limiting examples of preferred silane compounds are vinyltrimethoxy silane, vinylbismethoxyethoxy silane, vinyltriethoxy silane, gamma-(meth)acryloxypropyltrimethoxy silane, gamma-(meth)-acryloxypropyltriethoxy silane and vinyltriacetoxy silane. Preferably, the silane-containing olefin copolymer or graft polymer is crosslinked under the action of water and a silanol condensation catalyst.

Copolymerisation can be carried out in the presence of one or more further comonomers which are copolymerisable with the two monomers and which, for example, may comprise one or more selected from vinylcarboxylate esters such as vinyl acetate and vinyl pivalate; (meth)acrylates such as methyl(meth)-acrylate, ethyl(meth)acrylate and butyl(meth)acrylate; (meth)acrylic acid derivatives such as (meth)acrylonitrile and (meth)acrylamide; vinyl ethers, such as vinylmethyl ether and vinylphenyl ether; alpha olefins such as propylene, 1-butene, 1-hexene, 1-octene and 4-methyl-1-pentene; olefinically unsaturated carboxyl acids, such as (meth)acrylic acid, maleic acid and fumaric acid; and aromatic vinyl compounds, such as styrene and alpha-methyl styrene.

Preferred comonomers are vinyl ethers of monocarboxylic acids having 1-4 carbon atoms, such as vinyl acetate and (meth)acrylate of alcohols having 1-8 carbon atoms, such as methyl(meth)acrylate. The expression"(meth)acrylic acid" used herein is intended to include both acrylic acid and methacrylic acid. The comonomer content in the polymer may amount to 40 wt% or less, preferably 0.5-35 wt%, more preferably 1-25 wt%.

According to the invention, the silane-containing polymer contains 0.001 - 15 wt% of the silane compound, preferably 0.01 - 5 wt% and especially preferred 0.1 - 3 wt%. In order to facilitate the incorporation of the solid conductive filler in the present invention it is preferred that the polymer comprises, apart from ethylene and the silane compound, at least one additional monomer chosen from the vinylcarboxylate esters, (meth)acrylates, (meth)acrylic acid derivatives and vinyl ethers mentioned above. This facilitates the mixing of the conductive filler. It is especially preferred that the olefin polymer comprises a terpolymer of ethylene, silane monomer and a third comonomer, which may be selected from one or more of $C_3$ - $C_8$ alpha-olefins; vinyl esters of monocarboxylic acids having 1-4 carbon atoms, preferably vinyl acetate; and (meth)acrylates of alcohols having 1-8 carbon atoms, such as methyl(meth)acrylate, ethyl(meth)acrylate, propyl(meth)acrylate, and butyl(meth)acrylate. Copolymers of ethylene, silane monomer and methyl-, ethyl- or butyl acrylate are especially preferred.

The copolymerization of ethylene, the unsaturated silane compound and, optionally, additional comonomers may be carried out under any suitable conditions resulting in the formation of the desirable polymer. The crosslinking of the silane polymer is carried out with the aid of a catalysts, preferably a silanol condensation catalyst. In general any silanol condensation catalyst may be used in the present invention and a silanol condensation catalyst may be selected from the group consisting of carboxylates of metals, such as tin, zinc, iron, lead and cobalt; organic bases, as well as inorganics acids and organics acids. Special examples of silanol condensation catalysts are dibutyltin dilaurate, dibutyltin diacetate, dioctyltin dilaurate, stannous acetate, stannous caprylate, lead naphthenate, zinc caprylate, cobalt naphthenate, ethyl amines, dibutyl amine, hexyl amines, pyridine, inorganic acids, such as sulphuric acid and hydrochloric acid and organics acids, such as toluenesulphonic acid, acetic acid, stearic acid and maleic acid, Tin carboxylates are especially preferred catalyst compounds.

The amount of silanol condensation catalyst employed is generally in the order of 0.001-2 wt%, preferably 0.01-0.5 wt%, of the amount of silane-containing polymer in the composition.

Other examples of olefin polymers are: polypropylene, propylene copolymer; polybutene, butene copolymers; highly short chain branched α-olefins copolymers with an ethylene co-monomer content of 50 mole percent or less; polyisoprene; EPR (ethylene copolymerized with propylene); EPDM (ethylene copolymerized with propylene and a diene such as hexadiene, dicyclopentadiene, or ethylidene norbornene); copolymers of ethylene and an α-olefin having 3 to 20 carbon atoms such as ethylene/octene copolymers; terpolymers of ethylene, α-olefin and a diene; terpolymers of ethylene, α-olefin, and an unsaturated ester; copolymers of ethylene and vinyl-tri-alkyloxy silane; terpolymers of ethylene, vinyl-tri-alkoloxy silane and an unsaturated ester; or copolymers of ethylene and one or more acrylonitrile and maleic acid esters. In a further embodiment of the present invention, the olefin polymer may comprise ethylene ethyl acrylate. The comonomers can be incorporated randomly or in block and/or graft structures.

In another embodiment of the present invention the olefin polymer may comprise or may be a heterophasic olefin copolymer, e.g. a heterophasic propylene copolymer. The heterophasic propylene copolymer may be preferably a heterophasic copolymer comprising a propylene random copolymer as matrix phase (RAHECO) or a heterophasic copolymer having a propylene homopolymer as matrix phase (HECO). A random copolymer is a copolymer where the comonomer part is randomly distributed in the polymer chains and it also consists of alternating sequences of two monomeric units of random length (including single molecules). It is preferred that the random propylene copolymer comprises at least one comonomer selected from the group consisting of ethylene and $C_4$-$C_8$ alpha-olefins. Preferred $C_4$-$C_8$ alpha-olefins are 1-butene, 1-pentene, 4-methyl-1-pentene, 1-hexene, 1-heptene or 1-octene, more preferred 1-butene. A particularly preferred random propylene copolymer may comprise or consist of propylene and ethylene. Furthermore, the comonomer content of the polypropylene matrix preferably is 0.5 to 10 wt%, more preferably 1 to 8 wt% and even more preferably 2 to 7 wt %. For combining optimum processability with the required mechanical properties, the incorporation of the comonomer can be controlled in such a way that one component of the polypropylene contains more comonomer than the other. Suitable polypropylenes are described e.g. in WO 03/002652.

According to a further embodiment of the present invention the ratio between the $MFR_2$ of the semiconductive

polyolefin composition to the $MFR_2$ of the olefin polymer base resin is preferably as high as possible. The increase in melt flow rate caused by adding the solid conductive filler or the GNP is as low as possible. A high ratio of $MFR_2$ of the semiconductive polyolefin composition to the $MFR_2$ of the olefin polymer base resin is beneficial for processing properties, e.g scorch performance, and mechanical properties. The typical $MFR_2$ of the olefin polymers is in the range of from 0.1 to 100 g/10 min as measured at 190°C for polyethylene, at 230°C for polypropylene and a load of 2.16 kg according to ISO 1133.

Preferably, the semiconductive polyolefin composition has a ratio of $MFR_2$ of the polyolefin composition to the $MFR_2$ of the olefin polymer base resin of 0.30 or more, wherein the $MFR_2$ is measured at a load of 2.16 kg in accordance to ISO 1133, at a temperature of 190 °C for polyethylene and at a temperature of 230 °C for polypropylene.

In one embodiment the semiconductive polyolefin compositions are crosslinkable. "Crosslinkable" means that the cable layer can be crosslinked before the use in the end application thereof. In crosslinking reaction of a polymer, interpolymer crosslinks (bridges) are primarily formed. Crosslinking can be initiated by free radical reaction using irradiation or preferably using a crosslinking agent, which is typically a free radical generating agent, or by the incorporation of crosslinkable groups into polymer component(s), as known in the art. Moreover, in cable applications the crosslinking step of the semiconductive composition is typically carried out after the formation of the cable.

The free radical generating crosslinking agent can be a radical forming crosslinking agent which contains at least one -O-O- bond or at least one -N=N- bond. More preferably, the crosslinking agent is a peroxide, whereby the crosslinking is preferably initiated using a well known peroxide crosslinking technology that is based on free radical crosslinking and is well described in the field. The peroxide can be any suitable peroxide, e.g. such conventionally used in the field.

As mentioned above crosslinking may also be achieved by incorporation of crosslinkable groups, preferably hydrolysable silane groups, into the polymer component(s) of the semiconductive composition. The hydrolysable silane groups may be introduced into the polymer by copolymerisation of e.g. ethylene monomers with silane group containing comonomers or by grafting with silane groups containing compounds, i.e. by chemical modification of the polymer by addition of silane groups mostly in a free radical grafting process. Such silane groups containing comonomers and compounds are well known in the field and e.g. commercially available. The hydrolysable silane groups are typically then crosslinked by hydrolysis and subsequent condensation in the presence of a silanol-condensation catalyst and water trace in a manner known in the art. Also silane crosslinking technique is well known in the art.

Preferably, the crosslinkable semiconductive composition layer comprises crosslinking agent(s), preferably free radical generating agent(s), more preferably peroxide. Accordingly, the crosslinking of at least the insulation layer, and optionally, and preferably, of the at least one semiconductive layer, is preferably carried out by free radical reaction using one or more free radical generating agents, preferably peroxide(s).

When peroxide is used as a cross-linking agent, then the cross-linking agent is preferably used in an amount of less than 10 wt%, more preferably in an amount of between 0.1 to 8 wt%, still more preferably in an amount of 0.2 to 3 wt% and even more preferably in an amount of 0.3 to 2.5 wt% with respect to the total weight of the composition to be cross-linked.

Non-limiting examples of peroxidic crosslinking agents are organic peroxides, such as di-tert-amylperoxide, 2,5-di(tert-butylperoxy)-2,5-dimethyl-3-hexyne, 2,5-di(tert-butylperoxy)-2,5-dimethylhexane, tert-butylcumylperoxide, di(tert-butyl)peroxide, dicumylperoxide, butyl-4,4-bis(tert-butylperoxy)-valerate, 1,1-bis(tert-butylperoxy)-3,3,5-trimethylcyclohexane, tert-butylperoxybenzoate, dibenzoylperoxide, bis(tert butylperoxyisopropyl)benzene, 2,5-dimethyl-2,5-di(benzoylperoxy)hexane, 1,1 -di(tert-butylperoxy)cyclohexane, 1,1-di(tert amylperoxy)cyclohexane, or any mixtures thereof. Preferably, the peroxide is selected from 2,5-di(tert-butylperoxy)-2,5-dimethylhexane, di(tert-butylperoxyisopropyl)benzene, dicumylperoxide, tert-butylcumylperoxide, di(tert-butyl)peroxide, or mixtures thereof.

In another embodiment of the present invention the semiconductive polyolefin composition can also contain further additive(s), such as antioxidant(s), stabiliser(s), water tree retardant additive(s), processing aid(s), scorch retarder(s), filler(s), metal deactivator(s), crosslinking booster(s), flame retardant additive(s), acid or ion scavenger(s), additional inorganic filler(s), voltage stabilizer(s) or any mixtures thereof. Additives are typical use in concentrations from 0.01 wt% to 10 wt%.

As non-limiting examples of antioxidants e.g. sterically hindered or semi-hindered phenols, aromatic amines, aliphatic sterically hindered amines, organic phosphites or phosphonites, thio compounds, and mixtures thereof, can be mentioned.

Preferably, the antioxidant is selected from the group of diphenyl amines and diphenyl sulfides. The phenyl substituents of these compounds may be substituted with further groups such as alkyl, alkylaryl, arylalkyl or hydroxy groups.

Preferably, the phenyl groups of diphenyl amines and diphenyl sulfides are substituted with tert.-butyl groups, preferably in meta or para position, which may bear further substituents such as phenyl groups.

More preferred, the antioxidant is selected from the group of 4,4'-bis(1,1'dimethylbenzyl)diphenylamine, para-oriented styrenated diphenylamines, 6,6'-di-tert.-butyl-2,2'-thiodi-p-cresol, tris(2-tert.-butyl-4-thio-(2'-methyl-4'hydroxy-5'-tert.-butyl)phenyl-5-methyl)phenylphosphite, polymerized 2,2,4-trimethyl-1,2-dihydroquinoline, or derivatives thereof. Of course, not only one of the above-described antioxidants may be used but also any mixture thereof.

The amount of an antioxidant is preferably from 0.005 to 2.5 wt%, based on the weight of the semiconductive composition. The antioxidant(s) are preferably added in an amount of 0.005 to 2 wt%, more preferably 0.01 to 1.5 wt%, even more preferably 0.04 to 1.2 wt%, based on the weight of the semiconductive composition. In a further preferable embodiment, the semiconductive composition may comprise free radical generating agent(s), one or more antioxidant(s) and one or more scorch retarder(s).

The scorch retarder (SR) is a well known additive type in the field and can i.e. prevent premature crosslinking. As also known the SR may also contribute to the unsaturation level of the polymer composition. As examples of scorch retarders allyl compounds, such as dimers of aromatic alpha-methyl alkenyl monomers, preferably 2,4-di-phenyl-4-methyl-1-pentene, substituted or unsubstituted diphenylethylenes, quinone derivatives, hydroquinone derivatives, monofunctional vinyl containing esters and ethers, monocyclic hydrocarbons having at least two or more double bonds, or mixtures thereof, can be mentioned. Preferably, the amount of a scorch retarder is within the range of 0.005 to 2.0 wt.%, more preferably within the range of 0.005 to 1.5 wt.%, based on the weight of the semiconductive composition. Further preferred ranges are e.g. from 0.01 to 0.8 wt%, 0.03 to 0.75 wt%, 0.03 to 0.70 wt%, or 0.04 to 0.60 wt%, based on the weight of the semiconductive composition. One preferred SR added to the semiconductive composition is 2,4-diphenyl-4-methyl-1-pentene.

Examples of processing aids include but are not limited to metal salts of carboxylic acids such as zinc stearate or calcium stearate; fatty acids; fatty amids; polyethylene wax; copolymers of ethylene oxide and propylene oxide; petroleum waxes; non ionic surfactants and polysiloxanes.

Non-limiting examples of additional fillers are clays precipitated silica and silicates; fumed silica calcium carbonate.

It is intended throughout the present description that the expression "compounding" embraces mixing of the material according to standard methods to those skilled in the art. Non-limiting examples of compounding equipments are continuous single or twin screw mixers such as Farell™, Werner and Pfleiderer™, Kobelco Bollling™ and Buss™, or internal batch mixers, such as Brabender™ or Banbury™.

Any suitable process known in the art may be used for the preparation of the semiconductive polyolefin compositions used in the present invention such as dry-mixing, solution mixing, solution shear mixing, melt mixing, extrusion, etc.

A process for producing the preferred semiconductive polyolefin composition, comprises pre-mixing the graphene nanoplatelets and the solid conductive filler.

Pre-mixing as used herein shall indicate that the mixing occurs before the resulting mixture is contacted and mixed with the olefin polymer base resin.

As mentioned above, the semiconductive polyolefin composition used in the present invention is highly useful in a wide variety of wire and cable applications. Especially it may be incorporated into an electric power cable, particularly in a semiconductive layer of the cable. A power cable is defined to be a cable transferring energy operating at any voltage, typically operating at voltages higher than 1 kV. The voltage applied to the power cable can be alternating (AC), direct (DC), or transient (impulse). Electric power cables, especially medium voltage, high voltage and extra high voltage cables, typically comprise two semiconductive layers and one insulation layer. The term "semiconductive" refers to electrical conductivity intermediate between that of insulating materials and conducting materials. A typical range of electrical conductivity for semiconductors is in the range from $10^{-9}$ to $10^{+3}$ S/cm (see for example McGraw-Hill Dictionary of scientific and technical terms), corresponding to electrical resistivity between $10^9$ to $10^{-3}$ ohm cm. Hence the term "semiconductive" excludes insulation materials. Likewise the present semiconductive polyolefin composition and the ingredients therefor exclude any applications for insulating compositions or insulating layers in a power cable.

The cable comprises preferably one or more conductors surrounded by at least a semiconductive layer and an insulation layer, in that order. More preferably, the cable comprises a conductor surrounded by an inner semiconductive layer, an insulation layer and optionally, and preferably, an outer semiconductive layer, in that order, as defined above. More preferably, at least the inner semiconductive layer comprises the semiconductive composition. Preferably also the outer semiconductive layer comprises the semiconductive composition.

In a preferred embodiment at least the inner semiconductive layer of the cable is crosslinkable. The outer semiconductive layer of the cable may be crosslinkable or non-crosslinkable, depending on the end application. Moreover, the outer semiconductive layer of the cable, if present, may be bonded or strippable, which terms have a well known meaning in the field. The semiconductive composition of the cable may comprise further component(s), such as further polymer component(s) and/or one or more additive(s).

It is evident to a skilled person that the cable can optionally comprise one or more other layer(s) comprising one or more screen(s), a jacketing layer or other protective layer(s), which layer(s) are conventionally used in of field of wire and cable.

The preferred cable is preferably an alternating current (AC) or direct current (DC) power cable, more preferably a medium voltage (MV), a high voltage (HV) or an extra high voltage (EHV) power cable. It is evident that the following further preferable embodiments, subgroups and further properties of the polymer compositions, and components thereof, and of the layers of the cable are generalisable and independent definitions which can be used in any combination for further defining the cable.

The polyolefin composition used in the present invention is highly suitable for power cables operating at voltages higher than 6 kV to 36 kV (medium voltage (MV) cables) and at voltages higher than 36 kV, known as high voltage (HV) cables and extra high voltage (EHV) cables, which EHV cables operate, as well known, at very high voltages. The terms have well known meanings and indicate the operating level of such cables. Combined with good electrical conductivity, the semiconductive composition has also superior surface smoothness and high processability.

The invention also provides a process for producing a cable, preferably a crosslinkable power cable, as defined above or in claims, comprising steps of applying on a conductor, preferably by (co)extrusion, at least a semiconductive layer comprising the semiconductive polyolefin composition of the present invention. Further layers may be applied in the same or additional coextrusion step(s).

**Examples**

**1. Measurement methods**

**(a) Melt Flow Rate**

The $MFR_2$ was measured with 2.16 kg load at 190°C for polyethylene and at 230°C for polypropylene according to ISO 1133.

**(b) Volume Resistivity**

For the measurement of volume resistivity 2 mm thick plaques were pressed at 150°C for two minutes. The plaques were cooled down to room temperature. The plaques were placed in between two metallic electrodes and the plaques heated to 120°C for 30 min to anneal the sample and ensure a good contact between the compound and the electrodes. The compounds were slowly cooled down to room temperature, roughly 22°C. The resistance R in ohm is measured using an ohm-meter. The area A is calculated as $A=\pi (d/2)^2$ where d is the diameter of the circular electrodes in cm. L is the thickness in cm of the plagues after annealing. All the distances are measured by callipers or micrometer screw. The volume resistance VR is calculated as VR= RxA /L.

**(c) Surface Roughness**

The surface roughness of the material was determined by investigations with optical microscopy of the surface of strings extruded under conditions applied in MFR (ISO 1133, with 2.16 kg load at 190°C) experiments. The surface of the strings was recorded with an optical camera focused on the profile of the string. The typical profile length investigated was 2.5 mm and the optical enlargement 50 times. The distances were calibrated with special objective glass with millimetres marks. The recorded profiles was analysed and position of the edge extracted. This can for example be performed with edge detection routines e.g. available in MatLab™. The long range bend or curvature of the strings was corrected for by a least-square curve fit with a polynomial of the order 2. The surface roughness was then calculated as the R_RMS calculated as
Equation 1:

**Equation 1.**

$$R\_RMS = \left(\frac{1}{n}\sum_{i=1}^{n}(\Delta y_i)^2\right)^{1/2}$$

Here $\Delta y_i$ is the deviation in micrometers between the recorded edge and the polynomial, i is the index of different pixels along the profile. For each material at least 8 different photos were recorded and analysed. The standard deviation of the obtained surface roughness index, R_RMS, was calculated.

## 2. Materials

### Graphene nanoplatelets. GNP

xGNP™, commercially available from XG Science. The density of the xGNP is around 2.0 g/cm$^3$ and the platelet thickness is in the range from 8 to 13 nanometers. The average lateral size (diameter) is around 5 micrometer. The BET data showed the surface area of the xGnP reached more than 100 m$^2$/g.

### Carbon black

Elftex™ 254, commercially available from Cabot Corporation, Leuwen, Belgium with the following properties:.

- Iodine number measured by ASTM D1510 < 180 m/g

- Particle size measured by ASTM D3849, procedure D <25 nm

- Ash content measured by ASTM D1506 <0.1 %

- Toluene extract measured by ASTM D4527 <0.03 %

### Expanded graphite

TIMREX® BNB90™, commercially available from Timcal Graphite and Carbon. This material has a particle size distribution with a D90 less than 100 $\mu$m. The surface areas are characterized with BET=28 m$^2$/g and Oil adsorption number of 150 ml/100g.

### EVA

Escorene™ 783, commercially available from ExxonMobile
The vinyl acetate-content of the material was 33% and the MFR$_2$=43 g/10min at 190°C and 2.16 kg.
Four materials were produced by mixing the polymer with the conductive filler using a Brabender mixer. For all compounds the conductive filler constitutes 10 percent based on weight shown in the table below. The base resin for all the materials is an ethylene vinyl-acetate (EVA) (ESCORENE™ 783) with a vinyl-acetate content of 33 wt% and MFR$_2$ of 43 g/10min. The GNP used was obtained from XG Science (xGNP™) with a typical thickness in the range from 8 to 13 nanometers and a diameter around 5 micrometers. The expanded graphite was TIMREX BNB90™. The carbon black was Elftex 254 from CABOT.
The compounds were produced in general accordance with the description of Kalaitzidou et al. Composites Science and Technology 67 (2007) 2045. The following processing scheme was adopted.
The base resin was cooled with liquid nitrogen and ground to a powder. The proper amount of the GNP or carbon black was dispersed in isopropanol in a glass bottle, with roughly 10 times more isopropanol by weight. For composition with a combination of carbon black and GNP the carbon black was dispersed in the isopropanol solution after the GNP. The isopropanol solution with the GNP and/or carbon black was placed in an ultrasound bath for 30 minutes at room temperature. The base resin was dispersed in the isopropanol solution with the GNP and/or carbon black to make a slurry. The slurry was placed in an ultrasound bath for another 30 minutes. Excessive isopropanol was evaporated by storage at room temperature for some days. The slurry was compounded into Brabender batch mixer preheated to 190°C and mixed at 50 revolutions per minute (RPM) for 10 min..

Table 1

|  |  | Example #1 | Example #2 | Comp. Example #1 | Comp. Example #2 | Comp. Example #3 |
|---|---|---|---|---|---|---|
| **EVA** | wt% | 90 | 90 | 90 | 90 | 100 |
| **xGNP** | wt% | 10 | 8 |  |  |  |
| **Expanded graphite** | wt% |  |  | 10 |  |  |
| **Carbon black** | wt% |  | 2 |  | 10 |  |
|  |  |  |  |  |  |  |

(continued)

|  | | Example #1 | Example #2 | Comp. Example #1 | Comp. Example #2 | Comp. Example #3 |
|---|---|---|---|---|---|---|
| $MFR_2$ (190°C/2.16kg) | g/ 10min | 15.12 | 21.68 | 12.05 | 34.83 | 43 |
| VR | ohm cm | $9.5x10^6$ | $2.5x10^4$ | $1.7x10^5$ | $8.3x10^9$ | $>1x10^{13}$ |
| R_RMS | $\mu$m | 79.7 $\pm$ 6.2 | 57.1 $\pm$ 13.4 | 123.6 $\pm$ 14.7 | 66.5 $\pm$ 22.8 | NA |
|  | | | | | | |
| $MFR_2$ (composition) / $MFR_2$(base resin) | | 0.35 | 0.50 | 0.28 | 0.81 | 1.00 |

The measurements show that with expanded graphite the surface is very rough, R_RMS above 100 micrometer, and unsuitable for cable applications. Example 1 containing 10 wt% of GNP has excellent surface smoothness, while the viscosity and volume resistivity is in a suitable range for semiconductive applications. In contrast, Comparative Example 2 shows that with 10 wt% carbon black the resistivity is too high, i.e. the material is not semiconductive. For all other compositions the volume resistivity is in the semiconductive range. The lowest volume resistivity is observed for the mixture of GNP and carbon black. The measurements also show that the lowest MFR values are obtained with expanded graphite, thus leading to unacceptable flowability and also the surface smoothness was unacceptable for cable applications With GNP or carbon black the ability to flow is sufficiently high. The $MFR_2$ of the pure EVA is 43 g/10min. To summarize the measurements show that the GNP-based semiconductive compositions gives superior surface smoothness and higher MFR (lower viscosity) as well as low volume resistivity. Especially beneficial is the combination of GNP and carbon black.

Thus the semiconductive polyolefin composition of the present invention does not only provide substantial decrease in surface roughness and volume resistivity, but also provides substantial increase in processability and flowability which is highly desirable for the manufacture of semiconductive layers in power cables. Moreover by the inventive combination of graphene nanoplatelets and carbon black in a semiconductive composition not only could the above effects be achieved but the process costs could be sharply decreased. The partial replacement of graphene nanoplatelets which are rather costly by carbon black leads to cost savings while the partial replacement of carbon black by graphene nanoplatelets gives synergistic effects regarding surface roughness decrease, conductivity increase and simultaneous flowability of the inventive composition.

## Claims

1. A power cable comprising a semiconductive polyolefin composition comprising

    (a) an olefin polymer base resin, and
    (b) graphene nanoplatelets

    wherein the graphene nanoplatelets (b) have an average thickness in the range of from 1 nm to 50 nm and a lateral diameter of 200 $\mu$m or less, both measured with atomic force microscopy (AFM).

2. The power cable according to claim 1, wherein the semiconductive polyolefin composition, further comprises
    (c) a solid conductive filler different from graphene nanoplatelets .

3. The power cable according to claim 1 or 2, wherein the average thickness of the graphene nanoplatelets (b) is in the range of from 1 nm to 40 nm.

4. The power cable according to any one of the preceding claims, wherein the graphene nanoplatelets (b) have an aspect ratio of diameter to thickness that is 50 or more, measured by atomic force microscopy.

5. The power cable according to any one of the preceding claims, wherein the graphene nanoplatelets (b) are contained in the semiconductive polyolefin composition in the range of from 2 to 20 wt%, based on the total weight of the polyolefin composition.

6. The power cable according to any one of claims 2 to 5, wherein the solid conductive filler (c) is carbon black.

7. The power cable according to claim 6, wherein said carbon black fulfills at least one of the following requirements:

(a) a iodine number of at least 30 mg/g, measured in accordance with ASTM D 1510,
(b) a DBP oil adsorption number of at least 30 ml/100 g, measured in accordance with ASTM D 2414,
(c) a BET nitrogen surface area of at least 30 $m^2$/g, measured in accordance with ASTM D 3037,
(d) a statistical surface area (STSA) of at least 30 $m^2$/g measured in accordance with ASTM D5816.

8. The power cable according to any one of claims 2 to 7, wherein the solid conductive filler (c) is contained in the semiconductive composition with a fraction of 5 to 95 wt%, in relation to the weight of the graphene nanoplatelets (b).

9. The power cable according to any one of the preceding claims, wherein the olefin polymer base resin (a) comprises an ethylene homo- or copolymer or a propylene homo- or copolymer.

10. The power cable according to any one of the preceding claims, wherein the olefin polymer base resin (a) comprises a copolymer of ethylene with at least one comonomer selected from unsaturated esters, preferably from vinyl esters, acrylic acid or methacrylic acid esters, more preferably the at least one comonomer is selected from methyl acrylate, ethyl acrylate or butyl acrylate, more preferably with the amount of acrylate comonomer units from 1 to 15 mol% with regard to the total amount of monomers in the polymeric part of the composition.

11. The power cable according to any one of the preceding claims, wherein the semiconductive polyolefin composition has a ratio of $MFR_2$ of the polyolefin composition to the $MFR_2$ of the olefin polymer base resin of 0.30 or more, wherein the $MFR_2$ is measured at a load of 2.16 kg in accordance to ISO 1133, at a temperature of 190 °C for polyethylene and at a temperature of 230 °C for polypropylene.

12. The power cable according to any one of the preceding claims, wherein the surface roughness of the semiconductive polyolefin composition **characterized by** R_RMS, measured on extruded samples, is 100 micrometer or less.

13. Power cable according to any one of claims 1 to 12 comprising a semiconductive layer which comprises the semiconductive polyolefin composition as defined in any one of claims 1 to 12.

14. Use of a semiconductive polyolefin composition comprising

(a) an olefin polymer base resin, and
(b) graphene nanoplatelets

in a semiconductive layer of a power cable,
wherein the graphene nanoplatelets (b) have an average thickness in the range of from 1 nm to 50 nm and a lateral diameter of 200 $\mu$m or less, both measured with atomic force microscopy (AFM).

**Patentansprüche**

1. Energiekabel, umfassend eine halbleitende Polyolefinzusammensetzung, die das Folgende umfasst:

(a) ein Olefinpolymerbasisharz und
(b) Graphennanoplättchen,

wobei die Graphennanoplättchen (b) eine mittlere Dicke in dem Bereich von 1 bis 50 nm und einen lateralen Durchmesser von 200 $\mu$m oder weniger aufweisen, beides mittels Atomkraftmikroskopie (AFM, für Englisch: Atomic Force Microscopy) gemessen.

2. Energiekabel nach Anspruch 1, wobei die halbleitende Polyolefinzusammensetzung ferner das Folgende umfasst: (c) einen festen leitenden Füllstoff, der von Graphennanoplättchen verschieden ist.

3. Energiekabel nach Anspruch 1 oder 2, wobei die mittlere Dicke der Graphennanoplättchen (b) in dem Bereich von 1 bis 40 nm liegt.

4. Energiekabel nach einem der vorhergehenden Ansprüche, wobei die Graphennanoplättchen (b) ein Aspektverhältnis von Durchmesser zu Dicke aufweisen, das 50 oder mehr beträgt, und zwar mittels Atomkraftmikroskopie gemessen.

5. Energiekabel nach einem der vorhergehenden Ansprüche, wobei die Graphennanoplättchen (b) in der halbleitenden Polyolefinzusammensetzung in dem Bereich von 2 bis 20 Gew. % enthalten sind, basierend auf dem Gesamtgewicht der Polyolefinzusammensetzung.

6. Energiekabel nach einem der Ansprüche 2 bis 5, wobei der feste leitende Füllstoff (c) Ruß ist.

7. Energiekabel nach Anspruch 6, wobei der Ruß mindestens eine der folgenden Bedingungen erfüllt:

   (a) ein Iodzahl von mindestens 30 mg/g, gemessen gemäß ASTM D 1510;
   (b) eine DBP-Öladsorptionszahl von mindestens 30 ml/100 g, gemessen gemäß ASTM D 2414;
   (c) eine gemäß BET mit Stickstoff gemessene Oberfläche von mindestens 30 $m^2$/g, gemessen gemäß ASTM D 3037;
   (d) eine statistische Oberfläche (STSA, für Englisch: statistical surface area) von mindestens 30 $m^2$/g, gemessen gemäß ASTM D5816.

8. Energiekabel nach einem der Ansprüche 2 bis 7, wobei der feste leitende Füllstoff (c) in der halbleitenden Zusammensetzung mit einem Anteil von 5 bis 95 Gew. % enthalten ist, und zwar in Bezug auf das Gewicht der Graphennanoplättchen (b).

9. Energiekabel nach einem der vorhergehenden Ansprüche, wobei das Olefinpolymerbasisharz (a) ein Ethylenhomo- oder -copolymer oder in Propylenhomo- oder copolymer umfasst.

10. Energiekabel nach einem der vorhergehenden Ansprüche, wobei das Olefinpolymerbasisharz (a) ein Copolymer von Ethylen mit mindestens einem Comonomer umfasst, ausgewählt aus ungesättigten Estern, vorzugsweise Vinylestern, Acrylsäure- oder Methacrylsäureestern, wobei besonders vorzugsweise das mindestens eine Comonomer aus Methylacrylat, Ethylacrylat oder Butylacrylat ausgewählt ist, wobei besonders vorzugsweise die Menge an Acrylatcomonomereinheiten 1 bis 15 Mol % beträgt, und zwar in Bezug auf die Gesamtmenge der Monomere in dem polymeren Teil der Zusammensetzung.

11. Energiekabel nach einem der vorhergehenden Ansprüche, wobei die halbleitenden Polyolefinzusammensetzung ein Verhältnis zwischen dem $MFR_2$ der Polyolefinzusammensetzung zu dem $MFR_2$ des Olefinpolymerbasisharzes von 0,30 oder mehr aufweist, wobei der $MFR_2$ bei einer Last von 2,16 kg gemäß ISO 1133 bei einer Temperatur von 190 °C für Polyethylen und einer Temperatur von 230 °C für Polypropylen gemessen wird.

12. Energiekabel nach einem der vorhergehenden Ansprüche, wobei die Oberflächenrauheit der halbleitenden Polyolefinzusammensetzung 100 $\mu$m oder weniger beträgt, **gekennzeichnet durch** R_RMS und gemessen an extrudierten Proben.

13. Energiekabel nach einem der Ansprüche 1 bis 12, umfassend eine halbleitende Schicht, die die halbleitende Polyolefinzusammensetzung nach einem der Ansprüche 1 bis 12 umfasst.

14. Verwendung einer halbleitenden Polyolefinzusammensetzung, die das Folgende umfasst:

   (a) ein Olefinpolymerbasisharz und
   (b) Graphennanoplättchen,

in einer halbleitenden Schicht eines Energiekabels,
wobei die Graphennanoplättchen (b) eine mittlere Dicke in dem Bereich von 1 bis 50 nm und einen lateralen Durchmesser von 200 $\mu$m oder weniger aufweisen, beides mittels Atomkraftmikroskopie (AFM) gemessen.

**Revendications**

1. Câble d'alimentation comprenant une composition de polyoléfine semi-conductrice comprenant

   (a) une résine à base de polymère d'oléfine et
   (b) des nanoplaquettes de graphène

   dans lequel les nanoplaquettes de graphène (b) ont une épaisseur moyenne comprise entre 1 nm et 50 nm et un diamètre latéral inférieur ou égal à 200 μm, tous deux mesurés par microscopie à force atomique (AFM-Atomic Force Microscopy).

2. Câble d'alimentation selon la revendication 1, dans lequel la composition de polyoléfine semi-conductrice comprend en outre
   (c) une charge conductrice solide autre que des nanoplaquettes de graphène.

3. Câble d'alimentation selon la revendication 1 ou 2, dans lequel l'épaisseur moyenne des nanoplaquettes de graphène (b) est comprise entre 1 nm et 40 nm.

4. Câble d'alimentation selon l'une quelconque des revendications précédentes, dans lequel les nanoplaquettes de graphène (b) ont un rapport d'aspect diamètre sur épaisseur supérieur ou égal à 50, mesuré par microscopie à force atomique.

5. Câble d'alimentation selon l'une quelconque des revendications précédentes, dans lequel les nanoplaquettes de graphène (b) sont contenues dans la composition de polyoléfine semi-conductrice dans la plage allant de 2 à 20 % en poids, sur la base du poids total de la composition de polyoléfine.

6. Câble d'alimentation selon l'une quelconque des revendications 2 à 5, dans lequel la charge conductrice solide (c) est du noir de carbone.

7. Câble d'alimentation selon la revendication 6, dans lequel ledit noir de carbone remplit au moins l'une des exigences suivantes :

   (a) un indice d'iode d'au moins 30 mg/g, mesuré selon l'ASTM D 1510,
   (b) un indice d'adsorption d'huile DBP d'au moins 30 ml/100 g, mesuré selon l'ASTM D 2414,
   (c) une surface BET de l'azote d'au moins 30 m$^2$/g, mesurée selon l'ASTM D 3037,
   (d) une surface par épaisseur statistique (STSA-Statistical Surface Area) d'au moins 30 m$^2$/g, mesurée selon l'ASTM D 5816.

8. Câble d'alimentation selon l'une quelconque des revendications 2 à 7, dans lequel la charge conductrice solide (c) est contenue dans la composition semi-conductrice dans une fraction de 5 à 95 % en poids, comparativement au poids des nanoplaquettes de graphène (b).

9. Câble d'alimentation selon l'une quelconque des revendications précédentes, dans lequel la résine à base de polymère d'oléfine (a) comprend un homo- ou copolymère d'éthylène ou un homo- ou copolymère de propylène.

10. Câble d'alimentation selon l'une quelconque des revendications précédentes, dans lequel la résine à base de polymère d'oléfine (a) comprend un copolymère d'éthylène avec au moins un comonomère choisi parmi des esters insaturés, de préférence, les vinylesters, les esters d'acide acrylique ou d'acide méthacrylique, de manière davantage préférée, le au moins un comonomère est choisi parmi l'acrylate de méthyle, l'acrylate d'éthyle ou l'acrylate de butyle, de manière davantage préférée encore, avec la quantité d'unités de comonomère d'acrylate de 1 à 15 % en moles par rapport à la quantité totale de monomères dans la partie polymère de la composition.

11. Câble d'alimentation selon l'une quelconque des revendications précédentes, dans lequel la composition de polyoléfine semi-conductrice a un rapport du MFR$_2$ de la composition de polyoléfine sur le MFR$_2$ de la résine à base de polymère d'oléfine supérieur ou égal à 0,30, dans lequel le MFR$_2$ est mesuré à une charge de 2,16 kg selon la norme ISO 1133, à une température de 190°C pour le polyéthylène et à une température de 230°C pour le polypropylène.

**12.** Câble d'alimentation selon l'une quelconque des revendications précédentes, dans lequel la rugosité de surface de la composition de polyoléfine semi-conductrice **caractérisée par** R_RMS, mesurée sur des échantillons extrudés, est inférieure ou égale à 100 micromètres.

**13.** Câble d'alimentation selon l'une quelconque des revendications 1 à 12, comprenant une couche semi-conductrice qui comprend la composition de polyoléfine semi-conductrice selon l'une quelconque des revendications 1 à 12.

**14.** Utilisation d'une composition de polyoléfine semi-conductrice comprenant

(a) une résine à base de polymère d'oléfine et
(b) des nanoplaquettes de graphène

dans une couche semi-conductrice d'un câble d'alimentation,
dans laquelle les nanoplaquettes de graphène (b) ont une épaisseur moyenne comprise entre 1 nm et 50 nm et un diamètre latéral inférieur ou égal à 200 $\mu$m, tous deux mesurés par microscopie à force atomique (AFM).

Figure 1

Figure 2

Figure 3

Figure 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5556697 A
- WO 2008079585 A
- US 20050064177 A1
- US 2002054995 A1
- US 2004127621 A1
- US 2006241237 A1
- US 2006231792 A1
- US 7071258 B
- WO 2008045778 A1
- WO 2008143692 A1
- US 4971726 A
- WO 03002652 A

**Non-patent literature cited in the description**

- McGraw-Hill Dictionary of Scientific and Technical Terms. 1989, 1698
- **STANKOVICH et al.** *Nature,* 2006, vol. 442, 282
- **SCHNIEPP.** *Journal of Physical Chemistry B,* 2006, vol. 110, 853
- **CHEN et al.** *Polymer,* 2003, vol. 44, 1781
- **SCHNIEPP.** *Journal of Physical Chemistry B,* 2006, vol. 110, 8535
- Encyclopedia of Polymer Science and Engineering. 1986, vol. 6, 383-410
- Polyethylene: High-pressure. **R.KLIMESCH ; D.LITTMANN ; F.-O. MÄHLING.** Encyclopedia of Materials: Science and Technology. Elsevier Science Ltd, 2001, 7181-7184
- **RANDALL.** *Re. Macromolecular Chem. Phys.,* vol. C29, 2, , 3
- McGraw-Hill Dictionary of scientific and technical terms
- **KALAITZIDOU et al.** *Composites Science and Technology,* 2007, vol. 67, 2045